Europäisches Patentamt

European Patent Office

Office européen des brevets

(11) Veröffentlichungsnummer: **0 254 146**
**B1**

## (12) EUROPÄISCHE PATENTSCHRIFT

(45) Veröffentlichungstag der Patentschrift:
**12.09.90**

(21) Anmeldenummer: **87109921.4**

(22) Anmeldetag: **09.07.87**

(51) Int. Cl.⁵: **G11B 23/113**

(54) Vorrichtung zum Aufnehmen und Absetzen von Spulen.

(30) Priorität: **18.07.86  DE 3624307**

(43) Veröffentlichungstag der Anmeldung:
**27.01.88 Patentblatt 88/4**

(45) Bekanntmachung des Hinweises auf die Patenterteilung:
**12.09.90 Patentblatt 90/37**

(84) Benannte Vertragsstaaten:
**CH DE FR GB IT LI NL**

(56) Entgegenhaltungen:
**DE-A- 1 560 353
DE-A- 3 230 239
DE-A- 3 246 434
DE-A- 3 248 135
DE-A- 3 412 058**

(73) Patentinhaber: **Agfa-Gevaert AG,
D-5090 Leverkusen 1(DE)**

(72) Erfinder: **Toral, José, Stiftsbogen 162,
D-8000 München 70(DE)**

ACTORUM AG

## Beschreibung

Die Erfindung betrifft eine Vorrichtung zum selbsttätigen Aufnehmen einer oder mehrerer Spulen mit mindestens zwei radial beweglichen Klauen, die zentral über Kolben gegen den Widerstand einer Feder nach außen drückbar sind und bei desaktiviertem Kolben den Spulenflansch umfassen und wobei die Spulen zwischen Aufnehmen und Absetzen drehbar gelagert sind.

Eine derartige Vorrichtung ist z.B. aus DE-A 3 248 135 bekannt.

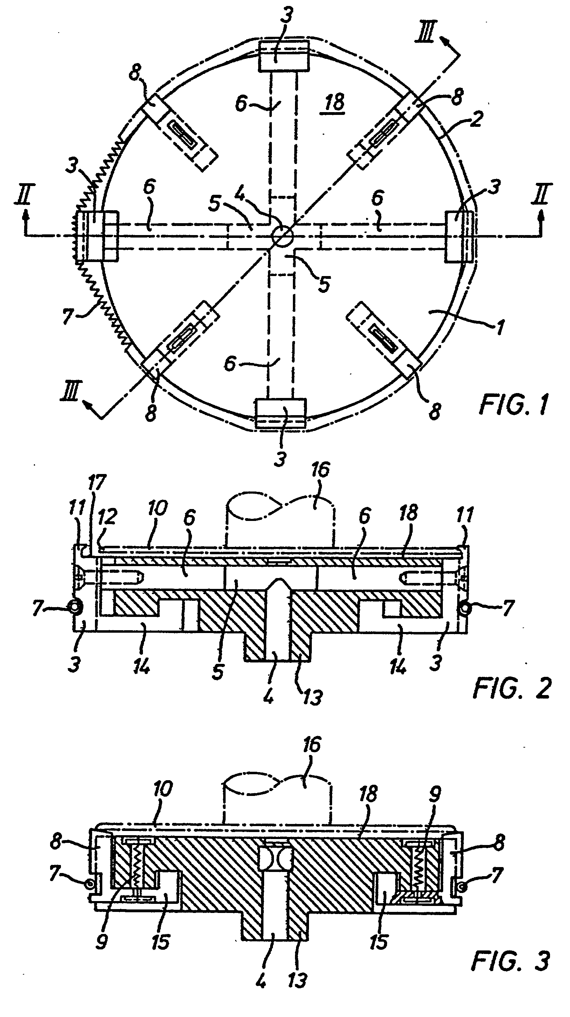

Im Zuge der automatischen Fertigung beispielsweise von Video-Cassetten werden Vorrichtungen benötigt, die eine oder mehrere Spulen selbsttätig aufnehmen und absetzen. Dabei soll auf einem sogenannten Winder ein durch Vorlaufband verbundenes Spulenpaar aufgesetzt werden, das mit Magnetband bewickelt und anschließend abgenommen wird, oder es soll ein fertig bewickeltes Spulenpaar von einem Werkstückträger abgenommen und in ein Cassettenunterteil eingesetzt werden. Die bisher bekannten Vorrichtungen sind entweder unrationell oder kompliziert zu handhaben oder nicht genügend zuverlässig. Sie sehen entweder ein Aufstecken per Hand vor oder wie in der DE-OS 32 48 135 (Figur 11) dargestellt, mit beweglichen betätigbaren Zangen. Bei letzterer Vorrichtung können jedoch die Spulen nicht drehbar gelagert sein, da sonst das zwischen ihnen befindliche Magnetband beschädigt würde. Nach der Lehre der DE-OS 34 12 058 geschieht das Aufnehmen der Spulen durch Vakuum-Saugnäpfe. Dabei besteht jedoch die Gefahr, daß die dort aus der Figur 1 erkennbaren auf dem Spulenflansch befindlichen Löcher, welche das Anklemmen des Bandes auf der Wickelnabe ermöglichen, den Ansaugvorgang behindern.

Daher bestand die Aufgabe, eine selbsttätige Aufnahme- und Absetzvorrichtung von Spulen zu finden, welche nicht die genannten Nachteile aufweist.

Die Aufgabe wurde erfindungsgemäß gelöst mit einem zylindrischen auf einer Achse (13) sitzenden Rundkörper (1), an dessen zylindrischer Außenfläche (2) mindestens zwei radial bewegliche Klauen (3) vorgesehen sind, deren Höhe größer ist als die des zylindrischen Rundkörpers und die über eine zentrale Bohrung (4) sowie über Bohrkanäle (5) mit Druckluft über Kolben (6) gegen den Widerstand einer an der zylindrischen Außenfläche (2) sämtliche Klauen verbindenden Feder (7) nach außen gedrückt werden und wobei jeweils zwischen den Klauen im wesentlichen axial bewegliche gewinkelte durch Schraubenfedern (9) vorgespannte Stifte (8) angebracht sind, deren oberes Ende an der Peripherie der Unterseite des Spulenflansches (10) anliegt.

Einzelheiten der Erfindung gehen aus den Unteransprüchen, den Zeichnungen und der Beschreibung hervor.

Die Erfindung wird nun anhand der Zeichnungen näher erläutert und zwar zeigen.

Figur 1 eine Aufsicht auf den erfindungsgemäßen zylindrischen Rundkörper

Figur 2 einen Querschnitt entlang der Linie II von Figur 1 mit aufliegendem Spulenflansch

Figur 3 einen Querschnitt entlang der Linie III von Figur 1 mit aufliegendem Spulenflansch

Figur 4 einen Ausschnitt aus Figur 2 mit einer Variante der erfindungsgemäßen Vorrichtung.

Der auf einer Festachse oder Drehachse (13) sitzende zylindrische Rundkörper (1) besitzt, wie aus Figur 1 zu erkennen, auf seiner zylindrischen Außenfläche (2) vorzugsweise äquidistant verteilt mindestens zwei, vorzugsweise mehr als sechs und in einer besonders bevorzugten Ausführung mindestens zehn radial bewegliche gewinkelte Klauen (3). Die Höhe der Klauen ist am Außenumfang größer als die Höhe des zylindrischen Rundkörpers, so daß die oberen Enden (11) der Klauen, welche abgewinkelt sind, greiferartig, wie aus Figur 2 zu ersehen, den aufgesetzten Spulenflansch (10) an dr Außenkante erfassen. Das gewinkelte obere Ende (11) der Klauen, welches den Spulenflansch greift, ist zweckmäßigerweise der Kantenform (12) des Spulenflansches angepaßt, so daß es lediglich geringfügig dessen obere Fläche, an welcher der Bandwickel anliegt, überragt. Über eine im Rundkörper vorgesehene zentrale Bohrung (4) können über jeder Klaue zugeordnete Bohrkanäle (5) die Kolben (6) mit Druckluft beaufschlagt werden. Die Kolben sind vorzugsweise starr mit den Klauen verbunden und drücken diese im beaufschlagten Zustand nach außen, wie aus Figur 1 und Figur 2 jeweils links zu erkennen ist. Der untere Teil (14) der Klauen sitzt im Rundkörper in einer Führung mit Anschlägen. Auf der Außenfläche der Klauen ist eine Nut vorgesehen, die als Führung für eine die Außenfläche des zylindrischen Rundkörpers umspannende Schraubenfeder (7) dient. Die Schraubenfeder drückt bei Wegfall der Druckluft die Klauen bis zum Anschlag nach innen.

Ebenfalls auf der zylindrischen Außenfläche befinden sich zwischen den Klauen gewinkelte Stifte (8), sogenannte Niederhalter (Figur 3). Zur Positionierung dieser Niederhalter sitzt das abgewinkelte Ende (15) der Stifte (8) in einer entsprechenden Bohrung des Rundkörpers (1). Die Stifte (8) hängen an Schraubenfedern (9), welche sich in Bohrungen des Rundkörpers befinden und an der Innenseite der Grundfläche (18) des Rundkörpers befestigt sind. Durch die vorgespannten Federn (9) werden die Stifte nach oben gezogen. An der Außenfläche besitzen die Stifte ähnlich wie die Klauen als Führung für die Feder (7) eine Nut. Diese Nut ist in ihrer axialen Richtung so dimensioniert, daß die Stifte (8) ausreichend beweglich sind. Die Nut zur Führung der Feder (7) kann auch auf der zwischen Klauen und Stiften befindlichen Außenfläche (2) des Rundkörpers (1) ausgebildet sein.

Der Durchmesser des erfindungsgemäßen Rundkörpers (1) ist etwas geringer als der Durchmesser des aufzusetzenden Spulenflansches (10), außerdem kann der Rundkörper beliebig schwenkbar gelagert sein, um beispielsweise eine Videospule von einem Werkstückträger aufzunehmen. Dazu werden die Klauen (3) zunächst durch Druckluftbetätigung nach außen bewegt, dann wird der Rundkörper mit seiner Grundfläche (18) auf den Flansch (10) der Videospule aufgesetzt, wobei die Stifte gegen die Kraft der Feder (9) nach unten gedrückt werden. Nach Beendigung der Druckluftbetätigung zieht die Feder (7) die Klauen (3) nach innen, worauf diese den Flansch (10) an dessen Kante (12) greifen. Der Rundkörper kann darauf durch entsprechende Betätigung vom Werkstückträger abgehoben werden, worauf die durch die Feder vorgespannten Stifte den Spulenflansch gegen das abgewinkelte obere Ende (11) der Klauen (3) drücken, so daß die Klauen nur mit einer geringen Höhe über der Innenseite des Spulenflansches stehen, wie aus Figur 2 rechte Seite, zu erkennen. Dadurch wird erreicht, daß bereits unmittelbar nach dem Abheben der Spule vom Werkstückträger, falls der Rundkörper auf der Achse (13) drehbar gelagert ist und falls die Spule ein Vorlaufband oder Magnetband enthält, dieses auf- oder abwickelbar ist. Dies ist deswegen möglich, weil einerseits die Breite des Magnetbandes etwas geringer ist als die Höhe der in den Figuren 2 und 3 angedeuteten Wickelnabe (16), die den Abstand der Flansche ausmacht, und weil, wie oben erläutert, durch die erfindungsgemäße Gestaltung der Klauen diese nur geringfügig über dem Flansch abstehen, so daß die Gefahr einer Deformation der Bandkanten sehr gering ist. Zum Absetzen der Spule beziehungsweise Aufstecken auf einem Winder werden wieder die Klauen durch Druckluftbetätigung nach außen gedrückt, wodurch die Spule freigegeben wird.

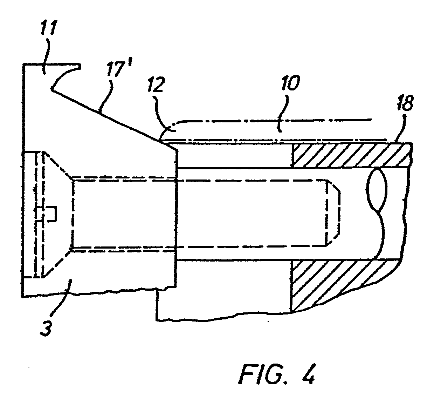

Eine Variante der erfindungsgemäßen Vorrichtung besteht darin, daß die innere Fläche (17) der Klauen (3), welche zur Außenfläche des Flansches (10) benachbart ist, nicht, wie in Figur 2 gezeichnet, parallel zur Grundfläche (18) des Rundkörpers verläuft, sondern, wie in Figur 4 dargestellt, konisch (17') nach außen ansteigt. Wird ein derartiger Rundkörper bei ausgefahrenen Klauen auf den Spulenflansch aufgesetzt und die Druckluftbetätigung dann gestoppt, so schieben die von der Feder (7) nach innen gedrückten Klauen mit der konisch verlaufenden Fläche (17') den Spulenflansch nach oben in die abgewinkelten Enden (11) der Klauen hinein, so daß bei dieser Ausführung entbehrlich sind und weggelassen werden können. In diesem Fall ist es zweckmäßig, daß die Klauen den größten Teil der zylindrischen Außenfläche (2) des Rundkörpers ausfüllen und daß ihre Außenflächen entsprechend zylindrisch geformt sind.

Eine weitere Variante, bei der ebenfalls die Stifte beziehungsweise Niederhalter entbehrlich sind, besteht darin, daß auf der Grundfläche (18) des Rundkörpers ein oder mehrere gleichmäßig verteilte federnde Elemente vorhanden sind, die den aufgesetzten Spulenflansch gegen die abgewinkelten Klauenenden drücken. Die federnden Elemente können Kugeln sein, die sich in Buchsen befinden, welche in Ausnehmungen des Rundkörpers sitzen und wobei die Kugeln durch Federn vorgespannt sind, so daß Kugelkalotten aus der Grundfläche herausragen. Gut geeignet sind auch auf der Grundfläche an einer Seite angenietete oder angeschraubte Blattfedern, deren freies Ende gegen den Spulenflansch drückt. Dabei soll das den Spulenflansch andrückende Element aus relativ weichem Material bestehen, um den Flansch nicht zu verkratzen, ferner müssen die federnden Elemente so positioniert sein, daß sie nicht auf die eingangs erwähnten auf dem Spulenflansch befindlichen Löcher treffen.

Die Vorteile der erfindungsgemäßen Vorrichtung gegen den bisher bekannten Stand der Technik lassen sich wie folgt zusammenfassen:
- sicheres und schonendes Aufnehmen der Spulen, auch bei relativ ungenauer Positionierung im Werkstückträger, was beim Produktionsbetrieb wichtig ist
- das Band kann, sobald die erfindungsgemäße Vorrichtung die Spule beziehungsweise das Spulenpaar erfaßt hat, auf- oder abgewickelt werden.

**Patentansprüche**

1. Vorrichtung zum selbsttätigen Aufnehmen einer oder mehrerer Spulen mit mindestens zwei radial beweglichen Klauen (3), die zentral über Kolben gegen den Widerstand einer Feder (7) nach außen drückbar sind und bei desaktiviertem Kolben den Spulenflansch umfassen und wobei die Spulen zwischen Aufnehmen und Absetzen drehbar gelagert sind, dadurch gekennzeichnet, daß
   — ein zylindrischer Rundkörper (1) vorgesehen ist, dessen Durchmesser etwas geringer ist als der Durchmesser des auf seiner Grundseite (18) aufzusetzenden Spulenflansches (10)
   — die radial im Rundkörper beweglichen Klauen die Grundseite (18) außen axial und radial etwas überragen, derart, daß sie einen aufgesetzten Spulenflansch ergreifen können
   — der Rundkörper ferner jeweils einer Klaue zugeordnete Kolben (6) aufweist, die über eine zentrale Bohrung sowie über Bohrkanäle mit Druckluft gegen den Widerstand einer den zylindrischen Rundkörper umspannenden Feder (7) beaufschlagbar sind
   — der Rundkörper ferner durch Feder (9) beaufschlagte axial über die Grundfläche hinaus bewegliche Mittel (8) aufweist, die an der Peripherie der Unterseite des Spulenflansches anlegbar sind.

2. Vorrichtung nach Anspruch 1, dadurch gekennzeichnet, daß das obere den Spulenflansch (10) greifende Ende (11) der Klauen (3) abgewinkelt sowie der Form der Außenkante (12) des Spulenflansches (10) angepaßt ist.

3. Vorrichtung nach Anspruch 1 und Anspruch 2, dadurch gekennzeichnet, daß eine Nut zur Führung der Feder (7) an der Außenfläche (2) des Rundkörpers (1) und/oder der Klauen (3) und/oder der die beweglichen Mittel bildenden Stifte (8) ausgebildet ist.

4. Vorrichtung nach den Ansprüchen 1–3, dadurch gekennzeichnet, daß die der Außenfläche des Spulenflansches (10) benachbarte Fläche (17') der Klauen (3) nach außen konisch ansteigt.

5. Vorrichtung nach den Ansprüchen 1 bis 4, dadurch gekennzeichnet, daß zwischen den Klauen (3) im wesentlichen axial bewegliche gewinkelte durch Schraubenfedern (9) vorgespannte Stifte (8) angebracht sind, deren obere Enden an der Peripherie der Unterseite des Spulenflansches (10) anlegbar sind.

## Revendications

1. Dispositif destiné à la réception automatique d'une ou plusieurs bobines, comportant au moins deux griffes (3) radialement mobiles, qui peuvent être pressées du centre vers l'extérieur par un piston contre la résistance d'un ressort (7) et qui, lorsque le piston n'est pas actionné, enserrent la joue des bobines, ces dernières étant supportées en rotation entre la réception et le dépôt, caractérisé en ce que:
   - il est prévu un corps circulaire cylindrique (1) dont le diamètre est légèrement plus petit que le diamètre de la joue de bobine (10) devant être posée sur sa base (18),
   - les griffes, mobiles radialement dans le corps circulaire, dépassent un peu la base (18) axialement et radialement vers l'extérieur, de manière à pouvoir saisir une joue de bobine placée sur cette base,
   - le corps circulaire présente en outre des pistons (6) associés à chaque griffe, qui peuvent être alimentés en air comprimé par un alésage central ainsi que par des canaux contre la résistance d'un ressort (7) faisant le tour du corps circulaire cylindrique,
   - le corps circulaire présente en outre des organes (8) sollicités par des ressorts (9), mobiles axialement au-delà de la base, qui peuvent être appliqués contre la périphérie de la face inférieure de la joue de bobine.

2. Dispositif selon la revendication 1, caractérisé en ce que l'extrémité supérieure (11) des griffes (3) saisissant la joue de bobine (10) est coudée, de même qu'elle est adaptée à la forme du bord externe (12) de la joue de bobine (10).

3. Dispositif selon la revendication 1 et la revendication 2, caractérisé en ce qu'une rainure servant, au guidage du ressort (7) est formée à la surface extérieure (2) du corps circulaire (1) et/ou des griffes (3) et/ou des broches (8) constituant les organes mobiles.

4. Dispositif selon les revendications 1–3, caractérisé en ce que la face (17') des griffes (3) contiguë à la face extérieure de la joue de bobine (10) s'élève en cône vers l'extérieur.

5. Dispositif selon les revendications 1 à 4, caractérisé en ce que des broches coudées (8), précontraintes par des ressorts hélicoïdaux (9), mobiles essentiellement en direction axiale, dont les extrémités supérieures peuvent être appliquées contre la périphérie de la face inférieure de la joue de bobine (10), sont disposées entre les griffes (3).

## Claims

1. An arrangement for automatically taking up one or more spools comprising at least two radially displaceable claws (3) which are designed to be centrally pressed outwards by pistons against the resistance of a spring (7) and, with the piston deactivated, surround the spool flange, the spools being mounted for rotation between taking up and setting down, characterized in that
   - a cylindrical round body (1) is provided, being slightly smaller in diameter than the spool flange (10) to be fitted onto its base (18),
   - the claws radially displaceable in the round body project slightly outwards beyond the base (18) both axially and radially so that they are able to grip a spool flange fitted on,
   - the round body further comprises pistons (6) each associated with a claw and operable by compressed air through a central bore or through bore-like passages against the resistance of a spring (7) surrounding the cylindrical round body,
   - the round body further comprises spring (9)-activated means (8) displaceable axially beyond its base and designed for application to the periphery of the underneath of the spool flange.

2. An arrangement as claimed in claim 1, characterized in that the upper end (11) of the claws (3) which grips the spool flange (10) is bent downwards and adapted to the shape of the outer edge (12) of the spool flange (10).

3. An arrangement as claimed in claims 1 and 2, characterized in that a groove for guiding the spring (7) is formed in the outer surface (2) of the round body (1) and/or the claws (3) and/or the pins (8) forming the displaceable means.

4. An arrangement as claimed in claims 1 to 3, characterized in that the surface (17') of the claws (3) adjacent the outer surface of the spool flange (10) rises conically outwards.

5. An arrangement as claimed in claims 1 to 4, characterized in that substantially axially displaceable, angled pins (8) biassed by helical springs (9) are provided between the claws (3) and are designed for application at their upper ends to the periphery of the underneath of the spool flange (10).

EP 0 254 146 B1

FIG. 1

FIG. 2

FIG. 3

FIG. 4